# EUROPÄISCHE PATENTSCHRIFT

(11) **EP 2 742 391 B1**
(45) Veröffentlichungstag und Bekanntmachung des Hinweises auf die Patenterteilung: **24.10.2018**
(21) Anmeldenummer: 12750548.5
(22) Anmeldetag: 30.07.2012
(51) Int. Cl.: G05B 19/042, G06F 8/35

(54) **VERFAHREN UND VORRICHTUNG ZUM AUTOMATISCHEN ERSTELLEN EINER AUSFÜHRBAREN SICHERHEITSFUNKTION FÜR EIN GERÄT**
METHOD AND APPARATUS FOR AUTOMATICALLY CREATING AN EXECUTABLE SAFETY FUNCTION FOR A DEVICE
PROCÉDÉ ET DISPOSITIF POUR ÉTABLIR AUTOMATIQUEMENT UNE FONCTION DE SÉCURITÉ EXÉCUTABLE POUR UN APPAREIL

(30) Priorität: 10.08.2011 DE 102011109888
(43) Veröffentlichungstag der Anmeldung: 18.06.2014
(73) Patentinhaber: Phoenix Contact GmbH & Co. KG, 32825 Blomberg (DE)
(72) Erfinder: RUTH, Olaf, 32825 Blomberg (DE)
(74) Vertreter: Patentship Patentanwaltsgesellschaft mbH
(86) Internationale Anmeldenummer: PCT/EP2012/064878
(87) Internationale Veröffentlichungsnummer: WO 2013/020852

(56) Entgegenhaltungen:
- DE-A1-102008 060 003
- US-B1- 6 442 441
- ANDREAS SVENDSEN ET AL: "The Future of Train Signaling", 28. September 2008 (2008-09-28), MODEL DRIVEN ENGINEERING LANGUAGES AND SYSTEMS; [LECTURE NOTES IN COMPUTER SCIENCE], SPRINGER BERLIN HEIDELBERG, BERLIN, HEIDELBERG, PAGE(S) 128 - 142, XP019107389, ISBN: 978-3-540-87874-2 das ganze Dokument

## Beschreibung

Die vorliegende Erfindung betrifft das Gebiet der Automatisierungstechnik.

Moderne Systeme der Automatisierungstechnik sind mit Sicherheitsfunktionen ausgestattet, welche im Falle eines sicherheitsrelevanten Ereignisses ausgelöst werden. Ein Beispiel für eine Sicherheitsfunktion ist ein Nothalt einer Maschine. Derartige Sicherheitsfunktionen weisen üblicherweise eine Architektur auf, welche durch die Norm DIN EN ISO 13849-1 bestimmt ist. Dort sind drei Funktionsbausteine S1, S2 und S2, definiert, welche mittels einer sicherheitsbezogenen Anwendungssoftware erstellt und hintereinandergeschaltet sind. Ein erster Funktionsbaustein S1 betrifft die Eingangsverarbeitung und ist vorgesehen, beispielsweise eine Äquivalenzauswertung von Ausgangssignalen sicherer Sensoren durchzuführen. Dem ersten Funktionsbaustein S1 ist ein zweiter Funktionsbaustein S2 nachgeschaltet, welcher für eine Zwischenverarbeitung vorgesehen ist. Die Zwischenverarbeitung ist dann notwendig, wenn Ausgangssignale der Eingangsverarbeitung nicht direkt mit beispielsweise einem Hardware-Ausgang oder mit der Ausgabeverarbeitung verschaltet werden dürfen. Die Zwischenverarbeitung kann einen Nothalt realisieren. Dem zweiten Funktionsbaustein S2 ist ein dritter Funktionsbaustein S3 nachgeschaltet, welcher für eine Ausgabeverarbeitung vorgesehen ist. Die Ausgabeverarbeitung ist dann erforderlich, wenn Funktionsbausteine unmittelbar vor einen Hardware-Ausgang eines Gerätes, beispielsweise External Device Monitoring (EDM), geschaltet werden, um diesen Ausgang zu steuern bzw. zu überwachen.

Die Funktionsbausteine S1 bis S3 können in einer sicheren Programmieroberfläche durch spezifische Softwaremodule abgebildet werden. Diese Module können Bestandteil von vorhandenen sicheren Programmieroberflächen sein. Die sichere Programmieroberfläche zeichnet sich dadurch aus, dass sie über Maßnahmen zur Erkennung von zufälligen Fehlern verfügt und auf diese Art der Fehler in der Form reagiert, dass diese Fehler nicht zu sicherheitskritischen Verhalten führen. Des Weiteren muss diese sichere Programmieroberfläche gemäß einem Entwicklungsprozess erstellt worden sein, der systematischen Fehlern entgegenwirkt.

Für jede Sicherheitsfunktion wird beispielsweise gemäß der Norm DIN EN ISO 13849-1 die oben beschriebene Architektur in Form einer Grafik dargestellt. Jeder der Funktionsbausteine S1, S2, S3 erhält ein Kontextmenü, in dem die Anforderungen in Form einer beispielsweise tabellarischen Auflistung spezifiziert werden. Die Informationen, die von dem Anwender an das Kontextmenü übergeben werden, entsprechen den klassischen Pflichtenheftinformationen.

Die Sicherheitsfunktion, welche üblicherweise durch eine Anwendungssoftware realisiert wird, muss insbesondere bezüglich den Anforderungen aus der Risikoanalyse spezifiziert und realisiert werden. Derzeit müssen hierfür die folgenden Prozessschritte P1 bis P7 eingehalten werden:
- P1:: Spezifikation der sicherheitsbezogenen Anwendungssoftware,
- P2:: Verifikation der Spezifikation,
- P3:: Herstellung der sicherheitsbezogenen Anwendungssoftware durch Codierung,
- P4:: Verifikation der sicherheitsbezogenen Anwendungssoftware mittels des so genannten White-Box-Tests,
- P5:: Erstellung einer Black-Box-Testspezifikation zur Validierung der sicherheitsbezogenen Anwendungssoftware,
- P6:: Verifikation der Black-Box-Testspezifikation,
- P7:: Validierung der sicherheitsbezogenen Anwendungssoftware auf der Basis der Black-Box-Testspezifikation.

Diese Prozessschritte P1 bis P7 müssen derzeit organisatorisch geplant und durch einen Anwender manuell durchgeführt werden. Dies ist jedoch aufwendig und mit einer erhöhten Fehlerwahrscheinlichkeit verbunden.

Die Druckschrift Andreas Svendsen et al.: "The future of train signaling", 28. September 2008, Model driven engineering languages and systems", Springer Berlin Heidelberg, XP019107389, ISBN 978-3-540-87874-2, betrifft ein automatisches Erstellen eines Verschlussplanes bzw. einer Verschlusstafel im Bereich der Eisenbahntechnik.

Die Druckschrift DE 10 2008 060003 A1 betrifft ein Verfahren und eine Vorrichtung zum Erstellen eines Anwenderprogramms für eine Sicherheitssteuerung.

Die Druckschrift US 6,442,441 B1 betrifft ein Verfahren zum automatischen Erzeugen und Verifizieren einer PLC Kodierung.

Es ist daher die Aufgabe der vorliegenden Erfindung, ein Konzept zur automatischen Erzeugung einer Sicherheitsfunktion für ein Gerät zu schaffen.

Diese Aufgabe wird durch die Merkmale der unabhängigen Ansprüche gelöst. Vorteilhafte Weiterbildungsformen sind in den abhängigen Ansprüchen, in der Beschreibung sowie in den Zeichnungen wiedergegeben.

Die vorliegende Erfindung basiert auf der Erkenntnis, dass eine Sicherheitsfunktion für ein Gerät automatisch beispielsweise in einer sicheren Programmierumgebung mittels beispielsweise einer Anwendungssoftware erstellt werden kann, wenn bereits bei der Spezifikation/Erstellung der Sicherheitsfunktion Sicherungsschichten vorgesehen werden, welche eine automatische Überprüfung bzw. Verifizierung der Sicherheitsfunktion ermöglichen.

Dadurch kann in einer sicheren Programmieroberfläche eine Funktion der Prozessführung von der Spezifikation zur sicherheitsbezogenen Anwendungssoftware für Applikationen der funktionalen Sicherheit an Maschinen und Anlagen automatisch realisiert werden. Dabei kann der Spezifikationsteil, beispielsweise ein digitales Softwarepflichtenheft, in die sichere Softwareoberfläche integriert werden, welche beispielsweise Kontextmenüs etc. aufweisen kann. Aus diesen Angaben der Kontextmenüs können von der sicheren Programmieroberfläche Quellcodes pro Funktionsbaustein erstellt, konfiguriert und zur vollständig programmierten und parametrierten Sicherheitsfunktion hergestellt werden.

Gemäß einem Aspekt betrifft die Erfindung ein Verfahren zum automatischen Erstellen einer ausführbaren Sicherheitsfunktion für ein Gerät, mit Erfassen von digitalen Parametern, welche eine bestimmte Sicherheitsfunktion spezifizieren, Bestimmen eines ersten Prüfwertes auf der Basis der digitalen Parameter, automatischem Zuordnen einer Anzahl von digitalen Funktionsbausteinen aus einer Mehrzahl von vordefinierten digitalen Funktionsbausteinen zu den erfassten digitalen Parametern, um einen Sicherheitsfunktionsquellcode der bestimmten Sicherheitsfunktion zu erhalten, und Kompilieren des Sicherheitsfunktionsquellcodes, um die ausführbare Sicherheitsfunktion zu erhalten, Bestimmen eines zweiten Prüfwertes auf der Basis der ausführbaren Sicherheitsfunktion, und Ausgeben der ausführbaren Sicherheitsfunktion falls der erste Prüfwert und das zweite Prüfwert ein Überprüfungskriterium erfüllen.

Die ausführbare Sicherheitsfunktion ist beispielsweise mittels eines Prozessors oder, generell, mittels einer Datenverarbeitungsanlage ausführbar. Die ausführbare Sicherheitsfunktion kann als Anwendungssoftware erstellt werden, welche bei deren Ausführung ein Programm liefert, welches das Architekturmodell nach der Norm DIN EN ISO 13849-1 realisiert. Die ausführbare Sicherheitsfunktion kann zumindest teilweise automatisch, d.h. ohne Interaktion mit einem Benutzer, auf Basis der digitalen Pflichtenheftinformationen erstellt werden.

Die digitalen Parameter können in der Gestalt von digitalen Werten vorliegen und beispielsweise sicherheitsbezogene Geräteparameter in Bezug zu einer benötigten Sicherheitsintegrität der Sicherheitsfunktion darstellen. Die digitalen Parameter können die Softwareverschaltungen der Gerätehardware mit den Funktionsbausteinen, die logische Verschaltung zwischen den Funktionsbausteinen, die Funktionsbausteine selbst sowie Parameter, welche die Funktionsbausteine charakterisieren bzw. parametrisieren, sein.

Der auf der Basis der digitalen Parameter bestimmte erste Prüfwert kann in einer ersten Sicherungsschicht bestimmt werden und sich pro Sicherheitsfunktion aus den digitalen Parametern selbst oder aus den digitalen Parametern einschließlich der Funktionsbausteine oder deren Parameter ergeben.

Die Mehrzahl von vordefinierten digitalen Funktionsbausteinen kann in einer digitalen Funktionsbausteinbibliothek, etwa einer Datenbank, abgelegt sein. Durch das automatische Zuordnen, das mittels einer ausführbaren Computerroutine erfolgen kann, werden die digitalen Funktionsbausteine auf der Basis der erfassten digitalen Parameter ausgewählt, wodurch der Sicherheitsfunktionsquellcode automatisch erzeugt wird. Die Funktionsbausteine selbst können in der Gestalt eines Funktionsbausteinquellcodes vorliegen. Die Funktionsbausteine können gemäß der Norm DIN EN ISO 13849-1 automatisch verschaltet werden und gemeinsam einen Sicherheitsfunktionsquellcode bilden.

Durch das Kompilieren des Sicherheitsfunktionsquellcodes wird die ausführbare Sicherheitsfunktion, beispielsweise in der Gestalt einer ausführbaren Anwendungssoftware, erhalten. Bei dem Kompilieren des Sicherheitsfunktionsquellcodes werden Anweisungen des Sicherheitsfunktionsquellcodes auf Anweisungen abgebildet, welche beispielsweise auf dem Gerät ausführbar sind.

Auf der Basis der ausführbaren Sicherheitsfunktion wird der zweite Prüfwert bestimmt. Der zweite Prüfwert kann in einer zweiten Sicherungsschicht bestimmt werden. Der zweite Prüfwert wird hier beispielsweise für den automatisch erstellten Software-Code verwendet.

Bevor die ausführbare Sicherheitsfunktion ausgegeben wird, werden der erste und der zweite Prüfwert hinsichtlich eines gemeinsamen Überprüfungskriteriums überprüft. Erfüllen beide Prüfwerte das gemeinsame Überprüfungskriterium, so wird die ausführbare Sicherheitsfunktion, beispielsweise ein Nothalt, ausgegeben, d.h. bereitgestellt.

Gemäß einer Ausführungsform wird die ausführbare Sicherheitsfunktion jedoch verworfen, falls der erste Prüfwert und der zweite Prüfwert das Überprüfungskriterium nicht erfüllen. Hierbei wird die ausführbare Sicherheitsfunktion beispielsweise nicht ausgegeben, sondern eine Fehlermeldung.

Gemäß einer Ausführungsform wird der erste Prüfwert durch eine Anwendung einer digitalen Prüfregel, insbesondere einer Bestimmung einer zyklischen Redundanz oder einer Prüfsumme, auf digitale Parameter, insbesondere auf digitale Parameter, welche dem jeweiligen digitalen Funktionsbaustein oder einer Kombination der digitalen Funktionsbausteine zugeordnet sind, bestimmt. Der erste Prüfwert kann bevorzugt automatisch mittels einer ausführbaren Computerroutine erzeugt werden.

Gemäß einer Ausführungsform werden der erste Prüfwert und der zweite Prüfwert anhand derselben digitalen Prüfregel, insbesondere der Bestimmung einer zyklischen Redundanz oder einer Prüfsumme, bestimmt. Durch die Verwendung derselben digitalen Prüfregel wird in vorteilhafter Weise die Verwendung eines gemeinsamen Überprüfungskriteriums, wie etwa der Gleichheit der beiden Prüfwerte, ermöglicht.

Gemäß einer Ausführungsform wird im Schritt des Kompilierens eine ausführbare Überprüfungsfunktion auf der Basis einer digitalen Prüfregel zum Bestimmen des zweiten Prüfwertes erzeugt.

Das Kompilieren kann mittels eines an sich bekannten Compilers, also eines Programmübersetzers, erfolgen. Hierbei können gemäß der digitalen Prüfregel Prüfdaten erstellt werden, welche als Testfälle eine oder mehrere Black-Box-Testspezifikationen zur Verfügung stellen. Diese Testfälle können spezifisch für jeden Funktionsbaustein der Sicherheitsfunktion beispielsweise manuell vordefiniert werden. Auf der Basis der Spezifikation der Sicherheitsfunktion mittels beispielsweise der digitalen Parameter können die Testfälle der einzelnen Funktionsbausteine für die gesamte Sicherheitsfunktion zusammengestellt werden. Auf der Basis dieser vordefinierten Testfälle können Prüfsummen pro Testfall ermittelt werden, wobei eine Prüfsumme ein Ausführungsbeispiel des zweiten Prüfwertes ist. Pro Testfall kann also jeweils ein zweiter Prüfwert ermittelt werden. Der jeweilige zweite Prüfwert kann mit dem ersten Prüfwert oder mit weiteren Prüfwerten anderer Sicherungsschichten gemäß einer Prüfregel überprüft, beispielsweise verglichen, werden. Gemäß einer Ausführungsform umfasst die ausführbare Überprüfungsfunktion eine Liste von ausführbaren Prüfregeln für digitale Parameter, welche zumindest einem ausgewählten digitalen Funktionsbaustein oder einer Kombination von ausgewählten digitalen Funktionsbausteinen zugeordnet sind. Die Liste von ausführbaren Prüfregeln kann auch logische Verknüpfungen der Funktionsbausteine und Parameter bzw. der verschalteten Aktualparameter an den Formalparametern umfassen.

Gemäß einer Ausführungsform wird die ausführbare Überprüfungsfunktion zum Bestimmen des zweiten Prüfwertes ausgeführt. Hierbei wird die Black-Box-Testspezifikation beispielsweise mittels eines Prozessors ausgeführt.

Gemäß einer Ausführungsform erfüllen der erste Prüfwert und der zweite Prüfwert das Überprüfungskriterium, wenn der erste Prüfwert und der zweite Prüfwert gleich sind oder wenn der erste Prüfwert und der zweite Prüfwert einen Schwellwert, insbesondere denselben Schwellwert, nicht überschreiten. Der Schwellwert kann vorgegeben und je nach Testfall unterschiedlich sein.

Gemäß einer Ausführungsform umfassen die digitalen Parameter ferner Geräteparameter, welche zumindest eine sicherheitsbezogene Gerätefunktion spezifizieren. Die sicherheitsbezogene Gerätefunktion kann einen Nothalt oder andere sicherheitsbezogene Gerätefunktionen gemäß der Norm DIN EN ISO 13849-1 spezifizieren.

Gemäß einer Ausführungsform werden zum Erfassen der digitalen Parameter die digitalen Parameter aus einer Tabelle, insbesondere aus einem digitalen Pflichtenheft, oder aus einem Speicher ausgelesen. Das digitale Pflichtenheft kann mittels eines Software-Browsers oder Editors durch einen Anwender erstellt werden. Die digitalen Parameter können aus dem Software-Browser oder aus dem Text-Editor automatisch ausgelesen werden. Hierbei kann der Anwender bei der Herstellung der ausführbaren Sicherheitsfunktion beispielsweise in einem Web-Browser strukturiert geführt werden.

Gemäß einer Ausführungsform werden im Schritt des Zuordnens der digitalen Funktionsbausteine ein erster digitaler Funktionsbaustein für die Eingangssignalverarbeitung, ein zweiter digitaler Funktionsbaustein für die Verarbeitung von Ausgangssignalen des ersten digitalen Funktionsbausteines, also für die Zwischenverarbeitung, und ein dritter digitaler Funktionsbaustein für die Erzeugung eines Ausgangssignals für das Gerät auf der Basis eines Ausgangssignals des zweiten digitalen Funktionsbausteins ausgewählt. Hierbei wird beispielsweise die Architektur gemäß der Norm DIN EN ISO 13849-1 realisiert.

Gemäß einer Ausführungsform ist der erste digitale Funktionsbaustein für eine Auswertung von Sensorsignalen, insbesondere eine Äquivalenzauswertung oder Antivalenzauswertung von Sensorsignalen, vorgesehen, der zweite digitale Funktionsbaustein ist für die Erzeugung einer Sicherheitsaktion, insbesondere eines Nothaltes, einer Anlaufsperre oder einer Ausschaltsperre, vorgesehen, und der dritte digitale Funktionsbaustein ist für die Ausgabe eines Steuersignals zur Steuerung des Gerätes gemäß der Sicherheitsaktion vorgesehen.

Gemäß einer Ausführungsform wird im Schritt des Zuordnens ein Klemmenplan für die Beschaltung des Gerätes erzeugt. Hierbei können die Eingangs-Ausgangsverbindungen beispielsweise softwaremäßig realisiert werden.

Gemäß einer Ausführungsform wird im Schritt des Zuordnens ein Klemmenplan für die Beschaltung des Gerätes erzeugt. Der Klemmenplan kann die äußere Beschaltung des Gerätes für die Ausführung der ausführbaren Sicherheitsfunktion angeben.

Gemäß einer Ausführungsform werden weitere Prüfwerte bestimmt, um die ausführbare Sicherheitsfunktion zu überprüfen. Die weiteren Prüfwerte können in weiteren Sicherungsschichten beispielsweise wie vorstehend ausgeführt bestimmt und zu einem zusätzlichen Vergleich mit dem ersten und/oder mit dem zweiten Prüfwert herangezogen werden, um weitere Testfälle realisieren zu können.

Gemäß einer Ausführungsform wird das Verfahren mittels einer Datenverarbeitungsanlage ausgeführt. Die Datenverarbeitungsanlage kann einen Prozessor aufweisen, welcher ausgebildet ist, ein Computerprogramm auszuführen, das die Schritte des Verfahrens zum automatischen Herstellen der ausführbaren Sicherheitsfunktion realisiert.

Gemäß einem weiteren Aspekt betrifft die Erfindung ein Computerprogramm zum Ausführen des Verfahrens zum automatischen Erstellen einer ausführbaren Sicherheitsfunktion, wenn das Computerprogramm auf einer Datenverarbeitungsanlage ausgeführt wird.

Gemäß einem weiteren Aspekt betrifft die Erfindung eine programmtechnisch eingerichtete Vorrichtung zum automatischen Erstellen einer ausführbaren Sicherheitsfunktion für ein Gerät, mit einem Prozessor, welcher ausgebildet ist, digitale Parameter, welche eine bestimmte Sicherheitsfunktion spezifizieren, zu erfassen, einen ersten Prüfwert auf der Basis der digitalen Parameter zu bestimmen, eine Anzahl von digitalen Funktionsbausteinen aus einer Mehrzahl von vordefinierten digitalen Funktionsbausteinen zu den erfassten digitalen Parametern zuzuordnen, um einen Sicherheitsfunktionsquellcode der bestimmten Sicherheitsfunktion zu erhalten, den Sicherheitsfunktionsquellcode zu kompilieren, um die ausführbare Sicherheitsfunktion zu erhalten, einen zweiten Prüfwert auf der Basis der ausführbaren Sicherheitsfunktion zu bestimmen, und die ausführbare Sicherheitsfunktion auszugeben, falls der erste Prüfwert und das zweite Prüfwert ein Überprüfungskriterium erfüllen.

Gemäß einer Ausführungsform ist der Prozessor ausgebildet, das Computerprogramm zum Ausführen des Verfahrens zum automatischen Erstellen einer automatischen Sicherheitsfunktion auszuführen.

Weitere Merkmale der programmtechnisch eingerichteten Vorrichtung bzw. deren Funktionalität ergeben sich unmittelbar aus den Merkmalen des Verfahrens zum automatischen Erstellen einer ausführbaren Sicherheitsfunktion.

Weitere Ausführungsbeispiele werden Bezug nehmend auf die beiliegenden Figuren erläutert. Es zeigen:
- Fig. 1: ein Diagramm eines Verfahrens zum automatischen Erstellen einer ausführbaren Sicherheitsfunktion;
- Fig. 2: ein Blockdiagramm einer programmtechnisch eingerichteten Vorrichtung gemäß einer Ausführungsform;
- Fig. 3: eine Architektur einer Sicherheitsfunktion gemäß einer Ausführungsform;
- Fig. 4: ein Blockdiagramm einer Sicherheitsfunktion gemäß einer Ausführungsform;
- Fig. 5a, 5b, 5c: ein Diagramm eines Verfahrens zum automatischen Erzeugen einer ausführbaren Sicherheitsfunktion gemäß einer Ausführungsform; und
- Fig. 6: ein Software-Erstellungsschema.

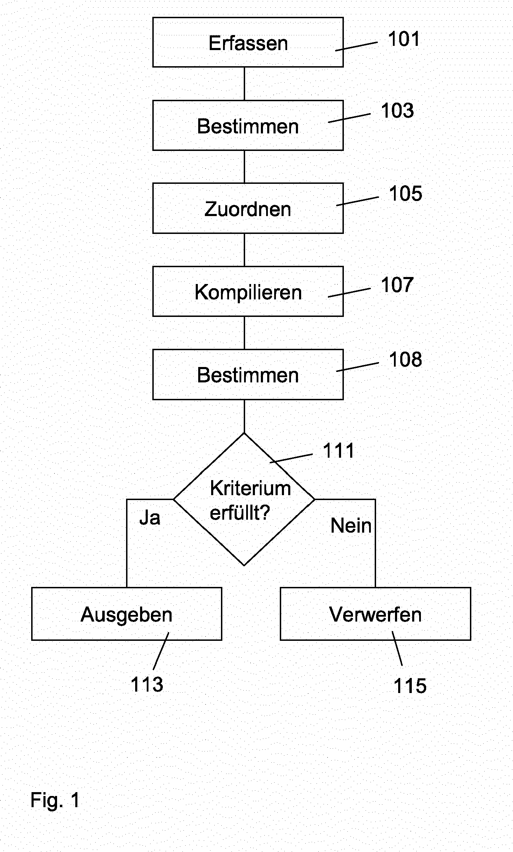

Fig. 1 zeigt ein Diagramm eines Verfahrens zum automatischen Erstellen einer ausführbaren Sicherheitsfunktion mit Erfassen 101 von digitalen Parametern, welche eine bestimmte Sicherheitsfunktion spezifizieren, Bestimmen 103 eines ersten Prüfwertes auf der Basis der digitalen Parameter, automatischem Zuordnen 105 einer Anzahl von digitalen Funktionsbausteinen aus einer Mehrzahl von vordefinierten digitalen Funktionsbausteinen zu den erfassten digitalen Parametern, um einen Sicherheitsfunktionsquellcode der bestimmten Sicherheitsfunktion zu erhalten, Kompilieren 107 des Sicherheitsfunktionsquellcodes, um die ausführbare Sicherheitsfunktion zu erhalten, Bestimmen 108 eines zweiten Prüfwertes auf der Basis der ausführbaren Sicherheitsfunktion, Überprüfen 111, ob die Prüfwerte ein Überprüfungskriterium erfüllen, und Ausgeben 113 der ausführbaren Sicherheitsfunktion, falls der erste Prüfwert und der zweite Prüfwert das Überprüfungskriterium erfüllen. Das Verfahren umfasst ferner das Verwerfen der ausführbaren Sicherheitsfunktion, falls der erste Prüfwert und der zweite Prüfwert das Überprüfungskriterium nicht erfüllen. Nach dem Schritt des Verwerfens 115 kann mit einem der vorgenannten Schritte fortgefahren werden, oder es wird beispielsweise eine Fehlermeldung ausgegeben.

Der erste und der zweite Prüfwert können auf der Basis der zyklischen Redundanz (CRC: Cyclic Redundancy Check) bestimmt werden, wobei das Überprüfungskriterium erfüllt ist, wenn der erste Prüfwert und der zweite Prüfwert beispielsweise gleich sind.

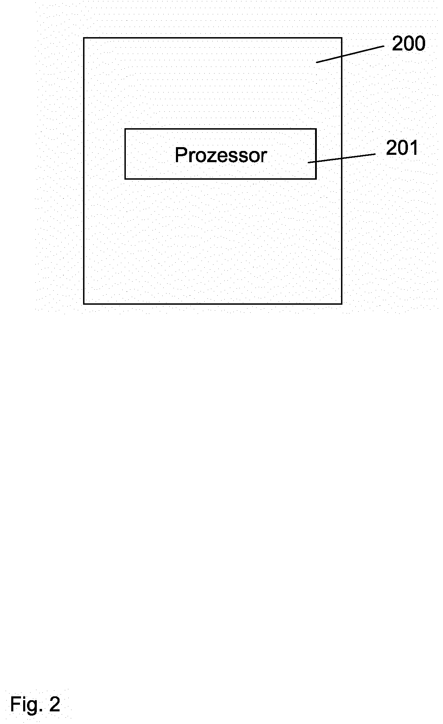

Fig. 2 zeigt ein Blockdiagramm einer programmtechnisch eingerichteten Vorrichtung 200 mit einem Prozessor 201, welcher ausgebildet ist, ein Computerprogramm zum Ausführen des in Fig. 1 dargestellten Verfahrens auszuführen.

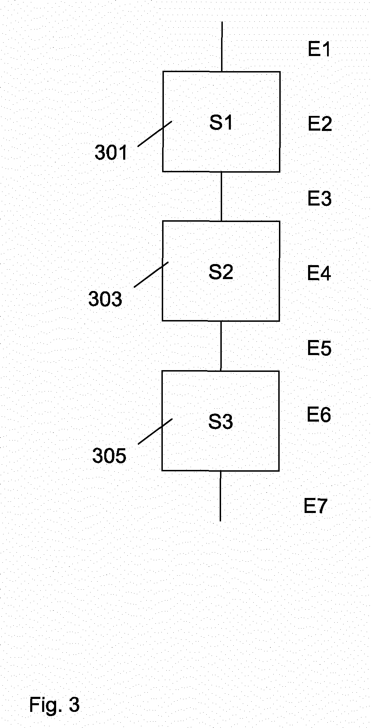

Mit Hilfe des in Fig. 1 dargestellten Verfahrens oder der in Fig. 2 dargestellten programmtechnisch eingerichteten Vorrichtung kann die ausführbare Sicherheitsfunktion in der Gestalt einer Anwendungssoftware erstellt werden, deren Softwarearchitektur beispielsweise durch die Norm DIN EN ISO 13849-1 bestimmt und in Fig. 3 dargestellt ist.

Die Sicherheitsfunktion umfasst einen ersten Funktionsbaustein 301 für die Eingangssignalverarbeitung (S1), einen zweiten Funktionsbaustein 303 für die Zwischenverarbeitung (S2), der dem ersten Funktionsbaustein 301 nachgeschaltet ist. Dem zweiten Funktionsbaustein 303 ist ein dritter Funktionsbaustein 305 für die Ausgabeverarbeitung (S3) nachgeschaltet. Die Eingangsverarbeitung kann dazu dienen, Ausgangssignale von sicheren Sensoren beispielsweise mittels einer Antivalenz- oder einer Äquivalenzauswertung auszuwerten. Die Zwischenverarbeitung ist vorgesehen, um den Ausgang des ersten Funktionsbausteins 301 von dem Eingang des dritten Funktionsbausteins 305 zu entkoppeln. Hierbei kann eine Nothaltfunktion vorgesehen sein, falls ein Ergebnis der Eingangssignalverarbeitung darauf hinweist. Das kann dann der Fall sein, falls Ausgangssignale von sicheren Sensoren nicht antivalent sind.

Der dritte Funktionsbaustein 305 liefert ein Ausgangssignal, das zu einer entsprechenden Sicherheitssteuerung eines Gerätes, wie etwa eines Motors, herangezogen werden kann. Das in Fig. 3 dargestellte Architekturmodell kann nach der DIN EN ISO 13849-1 in die Elemente E1-E7 unterteilt werden. Für jedes der Elemente kann ein Prüfkriterium in Bezug zu Pflichteinheftinformationen zugewiesen werden. Die Prüfkriterien spiegeln die Eigenschaften der Funktionsbausteine 301, 303 und 305 wider und können entweder extern von der Dateneingabe ermittelt oder für die Funktionsbausteine einschließlich deren Parametrierung festgelegt sein oder Verschaltungen der Funktionsbausteine zu Sicherheitsfunktionen spezifizieren oder sicherheitsbezogene Geräteparameter spezifizieren oder eine Code-Simulation spezifizieren, um einen Black-Box-Testfall zu spezifizieren, oder Klemmenpläne angeben.

In der folgenden Tabelle 1 sind Beispiele für die Elemente E1-E7 angegeben.

**Tabelle 1**

| Element | Funktion / Angaben. |
|---|---|
| E1 | Verbindungen zu S1 |
| | Quelle / Ziel / Datentyp |
| E2 | S1 aus dem Softwarearchitekturmodell der DIN EN ISO 13849-1. |
| | Typ(FB) / Verknüpfungen der Formalparameter zu weiteren Elementen |
| E3 | Verbindungen zu S2 |
| | Quelle / Ziel / Datentyp |
| E4 | S2 aus dem Softwarearchitekturmodell der DIN EN ISO 13849-1. |
| | Typ(FB) / Verknüpfungen der Formalparameter zu weiteren Elementen |
| E5 | Verbindung S3 |
| | Quelle / Ziel / Datentyp |
| E6 | S3 aus dem Softwarearchitekturmodell der DIN EN ISO 13849-1. |
| | Typ(FB) / Verknüpfungen der Formalparameter zu weiteren Elementen |
| E7 | Verbindung von S3 zur Hardware |
| | Quelle / Ziel / Datentyp |

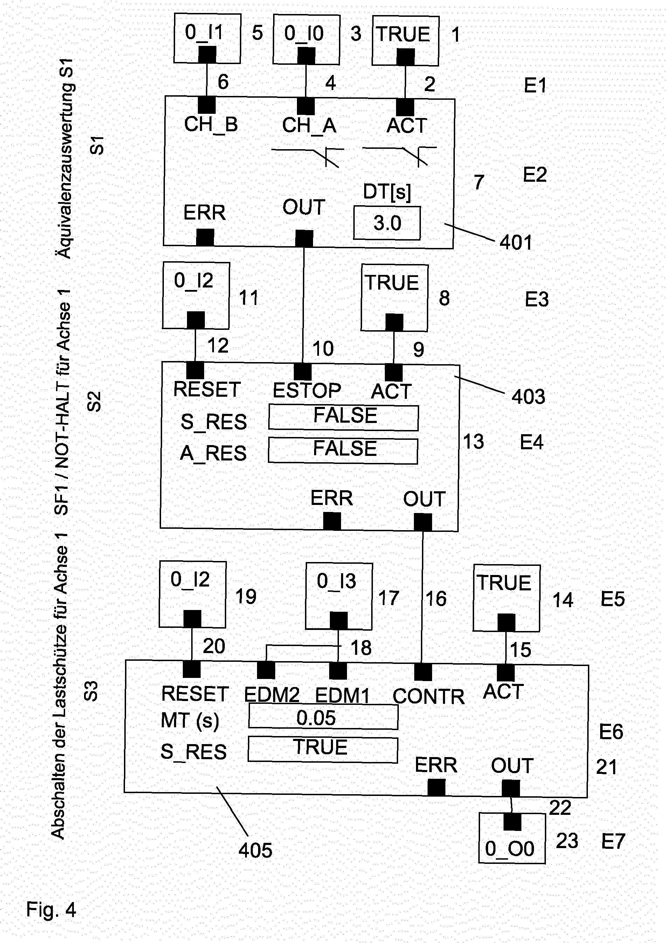

Fig. 4 zeigt eine beispielhafte Architektur einer Sicherheitsfunktion im Kontext der in Fig. 3 dargestellten Softwarearchitektur. Die Sicherheitsfunktion umfasst einen ersten Funktionsbaustein 401, dem ein zweiter Funktionsbaustein 403 nachgeschaltet ist. Dem zweiten Funktionsbaustein 403 ist ein dritter Funktionsbaustein 405 nachgeschaltet. Die in Fig. 3 dargestellten, verschalteten Bausteine 401, 403 und 405 sind beispielsweise das Ergebnis eines automatischen Zuordnens von digitalen Funktionsbausteinen anhand eines elektronischen Pflichtheftes und legen den Sicherheitsfunktionsquellcode der ausführbaren Sicherheitsfunktion fest. Bei der Sicherheitsfunktion kann es sich beispielsweise um einen Nothalt für eine erste Achse einer Maschine handeln. So kann der erste Funktionsbaustein 401 die Eingangsverarbeitung ausführen, bei der eine Antivalenzauswertung der Kanäle CH_A und CH_B durchgeführt wird. Der erste Funktionsbaustein 401 kann einen Aktivierungseingang ACT aufweisen, durch welchen dieser aktivierbar ist. Der erste Funktionsbaustein 401 umfasst ferner einen Ausgang OUT, welcher mit einem ESTOP-Eingang (ESTOP: Emergency Stop) des zweiten Funktionsbausteins 403 verbunden ist.

Der zweite Funktionsbaustein 403 kann die Zwischenverarbeitung ausführen und ein Nothaltsignal für eine Achse (Achse 1) einer Maschine erzeugen. Der zweite Funktionsbaustein 403 umfasst einen Ausgang OUT, welcher mit einem Eingang CONTR (CONTR: Control) des dritten Funktionsbausteins 405 verbunden ist. Der dritte Funktionsbaustein 405 führt die Ausgabeverarbeitung durch und hat einen Ausgang OUT, über welchen ein Gerät, beispielsweise der Achse 1 der Maschine, angesteuert werden kann. Der dritte Funktionsbaustein 405 kann einen Aktivierungseingang ACT umfassen, über welchen der dritte Funktionsbaustein 405 aktivierbar ist. Ferner können parallel geschaltete Steuereingänge EDM_1 und EDM_2 vorgesehen sein (EDM: External Device Monitoring). Der zweite Funktionsbaustein 403 und der dritte Funktionsbaustein 405 können ferner über Reset-Eingänge zur Fehlerquittierung und/oder zur Aufhebung von aktiven Anlaufsperren verfügen.

In Tabelle 2 sind beispielhafte Parameter für die Elemente E1, E3, E5 und E7 angegeben.

**Tabelle 2**

| Nr. | Absolute Nummer des Elementes im grafischen Editor | |
|---|---|---|
| Quelle/Ziel | Eingangperipherie | 11 hex |
| | Ausgangsperipherie | 12hex |
| | Literal TRUE | 13hex |
| | Literal FALSE | 14hex |
| | FB: EQ | 21hex |
| | FB: AV | 22hex |
| | FB: E_STOP | 41hex |
| | FB: G_MON | 42hex |
| | FB: EDM | 81hex |
| | ... | |
| Datentyp | BOOL | A1hex |
| | SAFEBOOL | B1hex |
| | BYTE | A2hex |
| | SAFEBYTE | B2hex |
| | WORD | A3hex |
| | SAFEWORD | B3hex |
| | ... | |
| Kanal CH | CH1 | C1hex |
| | CH2 | C2hex |
| HW-Adresse HW-A | 0.0 - 255.7 | |
| Formalparameter | Eingangsparameter1 | E1hex |
| FP | Eingangsparameter1 | E2hex |
| | ... | |
| | Ausgangsparameter1 | F1hex |
| | Ausgangsparameter2 | F2hex |
| | ... | |

Die Tabelle 3 verdeutlicht ein Beispiel für das Element E1.

**Tabelle 3**

| Nr. | Quelle Nr | Adresse | Kanal | Datentyp | Ziel/Nr. | FP |
|---|---|---|---|---|---|---|
| 02 | 13 01 | -- | -- | A1 | 21 07 | E1 |
| 04 | 11 03 | 0 | C1 | B1 | 21 07 | E2 |
| 06 | 11 05 | 1 | C2 | B1 | 21 07 | E3 |

Die Tabelle 4 verdeutlicht ein Beispiel für die Elemente E3, E5:

**Tabelle 4**

| Nr. | Quelle/Nr. | FP/Adresse | Kanal | Datentyp | Ziel/Nr. | FP |
|---|---|---|---|---|---|---|
| 9 | 13 08 | -- | -- | A1 | 41 13 | E1 |
| 10 | 21 07 | F1 | -- | B1 | 41 13 | E2 |
| 12 | 11 11 | 02 | -- | B1 | 41 13 | E3 |

In der Tabelle 5 ist ein Beispiel für das Elemente E7 angegeben.

**Tabelle 5**

| Nr. | Quelle/Nr. | FP | Datentyp | Ziel | Adresse | FP |
|---|---|---|---|---|---|---|
| 22 | 41 21 | F1 | B1 | 12 | 0 | -- |

In der Tabelle 6 sind beispielhafte Kriterien für die Elemente E2, E4 und E6 angegeben. Für jedes dieser Elemente (Funktionsbausteine) können spezifische Prüfkriterien erforderlich sein.

**Tabelle 6**

| Nr. | Absolute Nummer des Elementes im grafischen Editor | |
|---|---|---|
| Art des FBs | FB: EQ | 21hex |
| | FB: AV | 22hex |
| | FB: E_STOP | 41hex |
| | FB: G_MON | 42hex |
| | FB: EDM | 81hex |
| | ... | |
| Formalparameter | Eingangsparameter1 | E1hex |
| FP | Eingangsparameter1 | E2hex |
| | ... | |
| | Ausgangsparameter1 | F1hex |
| | Ausgangsparameter2 | F2hex |
| | ... | |

| Quelle/Ziel | Verschaltung der Formalparameter | |
|---|---|---|
| Datentyp | BOOL | A1hex |
| | SAFEBOOL | B1hex |
| | BYTE | A2hex |
| | SAFEBYTE | B2hex |
| | WORD | A3hex |
| | SAFEWORD | B3hex |
| | Time | A3 (Wert in ms) |
| | ... | |

In der Tabelle 7 ist ein Beispiel für das Element E2 angegeben.

**Tabelle 7**

| Nr. | Art | FP | Datentyp | Ziel/Nr. | Datentyp |
|---|---|---|---|---|---|
| 07 | 21 | E1 | A1 | 02 | A1 |
| 07 | 21 | E2 | B1 | 04 | B1 |
| 07 | 21 | E3 | B1 | 06 | B1 |
| 07 | 21 | E4 | A3 3000 | -- | -- |
| 07 | 21 | F1 | B1 | 10 | B1 |
| 07 | 21 | F2 | A1 | -- | -- |

In der Tabelle 8 ist ein Beispiel für das Element E4 angegeben.

**Tabelle 8**

| Nr. | Art | FP | Datentyp | Ziel/Nr. | Datentyp |
|---|---|---|---|---|---|
| 13 | 41 | E1 | A1 | 09 | A1 |
| 13 | 41 | E2 | B1 | 10 | B1 |
| 13 | 41 | E3 | B1 | 12 | B1 |
| 13 | 41 | E4 | A1 00 | -- | -- |
| 13 | 41 | E5 | A1 00 | -- | -- |
| 13 | 41 | F1 | B1 | 16 | B1 |
| 13 | 41 | F2 | A1 | -- | -- |

In Tabelle 9 ist ein Beispiel für das Element E6 angegeben.

**Tabelle 9**

| Nr. | Art | FP | Datentyp | Ziel/Nr. | Datentyp |
|---|---|---|---|---|---|
| 21 | 81 | E1 | A1 | 15 | A1 |
| 21 | 81 | E2 | B1 | 16 | B1 |
| 21 | 81 | E3 | B1 | 18 | B1 |
| 21 | 81 | E4 | B1 | 18 | B1 |
| 21 | 81 | E5 | A1 | 20 | A1 |
| 21 | 81 | E6 | A3 50 | -- | -- |
| 21 | 81 | E7 | A1 01 | -- | -- |
| 21 | 81 | F1 | B1 | 22 | B1 |
| 21 | 81 | F2 | A1 | -- | -- |

Die in den vorstehenden Tabellen zusammengefassten Werte liefern digitale Parameter der Sicherheitsfunktion. Die digitalen Parameter können ferner sicherheitsbezogene Geräteparameter umfassen, wie etwa eine Querschlusserkennung an einem Eingang 0, bei deren Vorliegen beispielsweise mit Testtakt TO verfahren wird, einer Querschlusserkennung am Eingang 1, bei deren Vorliegen mit Testtakt T1 weiter verfahren wird, oder mit Querschlusserkennungen an weiteren Eingängen, welchen beispielsweise keine Parameterwerte zugewiesen werden.

In der Tabelle 10 sind beispielhafte gerätespezifische digitale Parameter dargestellt.

**Tabelle 10**

| | | |
|---|---|---|
| Hardware-Eingänge | A0..n | |
| Eingangsparameter | Mit Querschlusserkennung | B1 |
| | Ohne Querschlusserkennung | B2 |
| Hardware-Ausgänge | C0..n | |
| Ausgangsparameter | masseschaltend | D1 |
| | nicht masseschaltend | D2 |

In Tabelle 11 sind beispielhafte Parameterzuordnungen dargestellt.

**Tabelle 11**

| | |
|---|---|
| A0 | B1 |
| A1 | B1 |
| A2 | B2 |
| A3 | B2 |
| C0 | D2 |

In den Tabellen 12 bis 15 sind beispielhafte Pflichtenheftspezifikationen für die in Fig. 4 dargestellte Sicherheitsfunktion dargestellt. Die darin angegeben Merkmale können stets digital als digitale Parameter codiert werden.

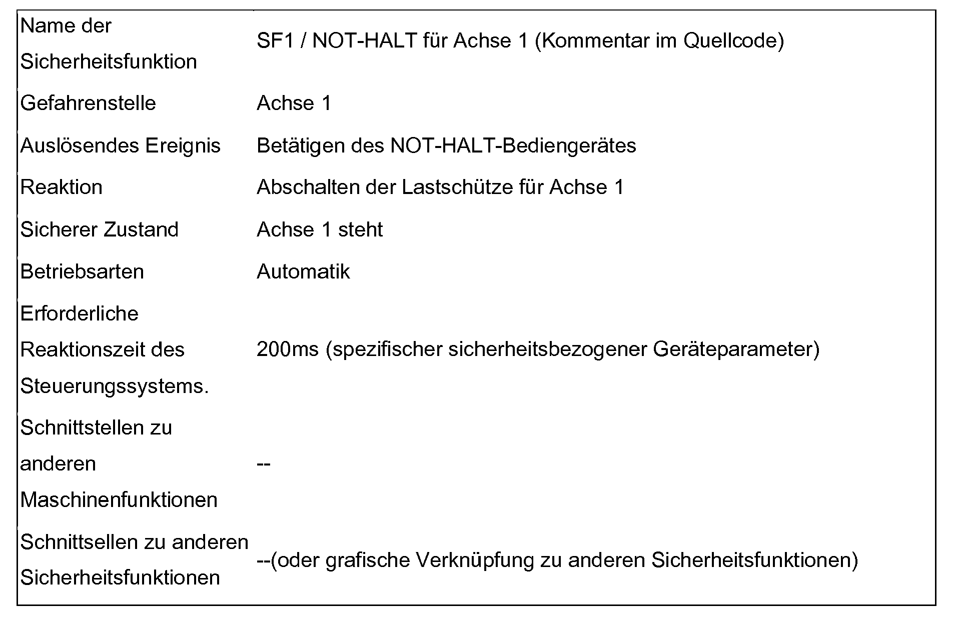

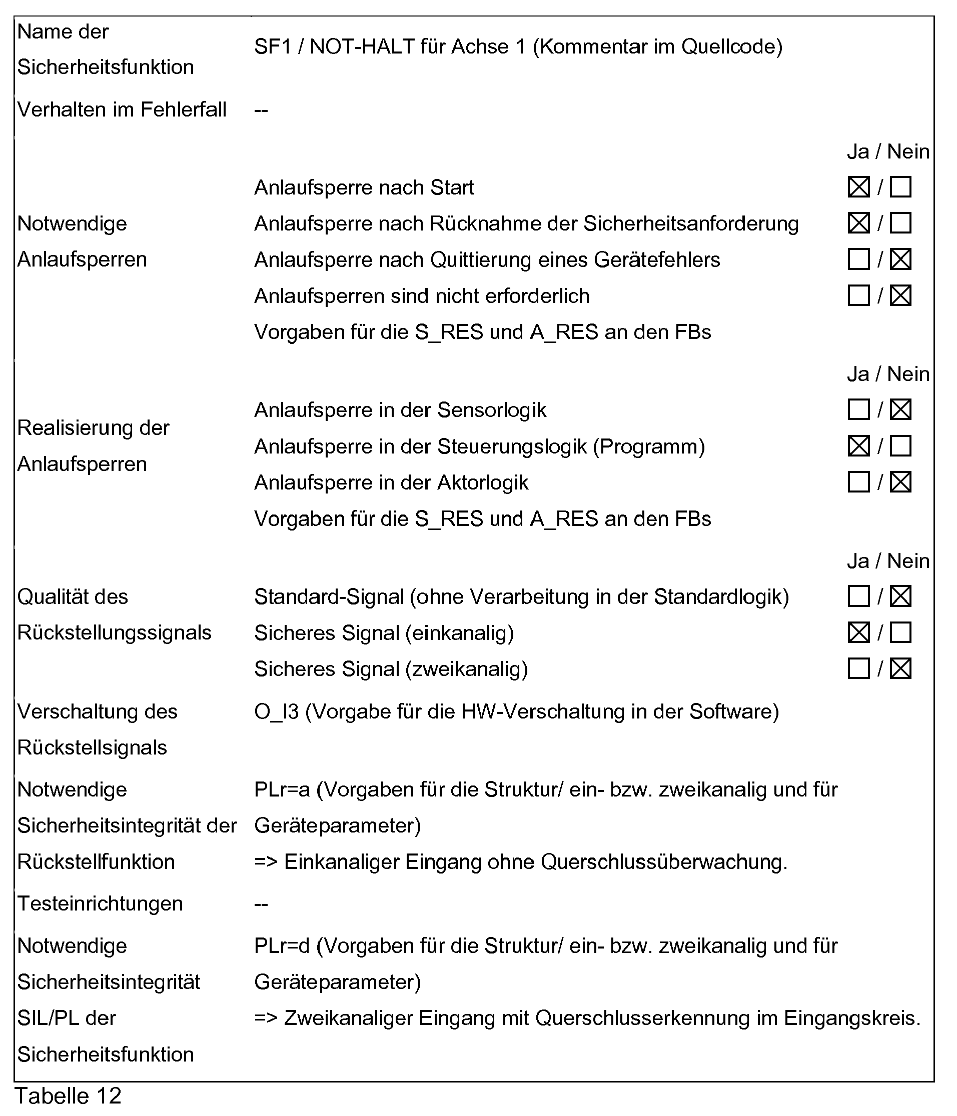

Die Klammerausdrücke in den folgenden Tabellen sind ausschließlich zur Erklärung der vorangestellten vorgesehen.

**Tabelle 13**

| S1 | Spezifikation |
|---|---|
| Funktion | Äquivalenzauswertung S1 |
| Instanzname | Äquivalent (zu verwendender FB) |
| Verschaltung der Eingangsparameter | ACT = TRUE (statische Bausteinaktivierung) |
| | CH_A = O_I0 (Parameter werden nach Instanz in der Eingabe dargestellt) |
| | CH_B = O_I1 |
| | (Vorgabe für die Verschaltung in der Software) |
| Verschaltung der Ausgangsparameter | OUT = S2 Emergency Stop ESTOP (Vorgabe für die HW-Verschaltung in der Software) |
| Nicht beschaltete Parameter | Error (Vorgabe für die Verschaltung in der Software) |
| Zeiten (optional) | DT 1000ms |

**Tabelle 14**

| S2 | Spezifikation |
|---|---|
| Funktion | NOT-HALT |
| Instanzname | Emergency Stop |
| Verschaltung der | ACT = TRUE (statische Bausteinaktivierung) |
| Eingangsparameter | ESTOP = S1 OUT (Parameter werden nach Instanz dargestellt) |
| | RESET = O_I2 |
| | S_RES und A_RES werden aus der Tabelle der Funktionsbeschreibung abgeleitet. |
| Verschaltung der Ausgangsparameter | OUT = S3 EDM CONTR |
| Nicht beschaltete Parameter | Error |
| Zeiten (optional) | -- |

**Tabelle 15**

| S3 | Spezifikation |
|---|---|
| Funktion | Schützkontrolle |
| Instanzname | EDM |
| Verschaltung der | ACT = TRUE (statische Bausteinaktivierung) |
| Eingangsparameter | CONTR = S2 OUT (Parameter werden nach Instanz dargestellt) |
| | EDM_1 = O_I3 |
| | EDM_2 = O_I3 |
| | RESET = O_I2 |
| | MT = 500ms |
| | S_RES wird aus der Tabelle der Funktionsbeschreibung abgeleitet. |
| Verschaltung der Ausgangsparameter | OUT = 0_O0 |
| Nicht beschaltete Parameter | Error |
| Zeiten (optional) | -- |

Aus den Pflichtenheftinformationen, welche elektronisch vorliegen und digitale Parameter liefern, sowie aus beispielsweise vordefinierten Prüfkriterien, wie der CRC-Erzeugung, können Prüflisten für die erste Sicherungsschicht generiert werden, in der beispielsweise der erste Prüfwert erzeugt wird. Hiernach kann ein Code-Generator auf der Basis der Pflichtenheftinformationen den Sicherheitsfunktionsquellcode, welcher beispielsweise an Einstellungen an den Funktionsbausteinen 401, 403 und 405 sowie einige oder alle der in Fig. 4 dargestellten Verschaltungen umfassen kann, erzeugen.

Der in Fig. 4 dargestellte Sicherheitsfunktionsquellcode wird beispielsweise mittels eines Compilers kompiliert. Der Compiler kann aus dem Sicherheitsfunktionsquellcode, welcher in einem Editor dargestellt werden kann, Prüflisten für alle Funktionsbausteine, d.h. Elemente sowie Teilelemente, erstellen, wodurch eine zweite Sicherungsschicht erzeugt wird, in welcher beispielsweise der zweite digitale Prüfwert ermittelt wird. Die generierten Kriterien, d.h. Prüfwerte, der ersten und der zweiten Sicherungsschicht werden miteinander verglichen. Sind die Prüfwerte, welche beispielsweise als Daten vorliegen, identisch, so ist sichergestellt, dass der Sicherheitsfunktionsquellcode den Anforderungen der Pflichtenheftspezifikation genügt. Der Sicherheitsfunktionsquellcode ist damit verifiziert. Sind die Prüfwerte unterschiedlich, so kann der Sicherheitsfunktionsquellcode hingegen nicht verifiziert und aus- bzw. freigegeben werden. Auf diese Weise kann in vorteilhafter Weise eine automatische Übernahme der Pflichtenheftspezifikationsdaten zum automatisch erstellten Quellcode für eine sicherheitsbezogene Anwendungssoftware, welche beispielsweise die ausführbare Sicherheitsfunktion realisiert, erfolgen. Auf diese Weise können die in den Kontextmenüs eines Pflichtenheftes standardisierten Spezifikationen abgebildet werden, welche eine automatische Erzeugung einer sicherheitsbezogenen Anwendungssoftware für Maschinen und Anlagen ermöglichen.

Das Verfahren zum automatischen Erstellen der ausführbaren Sicherheitsfunktion kann gemäß einer Ausführungsform in die folgenden Teilschritte P1 bis P7 unterteilt werden.

Im Teilschritt P1 kann ein Software-Architekturmodell gemäß der Norm DIN EN ISO 13849-1 samt Spezifikation festgelegt werden. Dabei entsteht beispielsweise die in Fig. 3 dargestellte Architektur der ausführbaren Sicherheitsfunktion.

Im Teilschritt P2 wird die Verifikation der Spezifikation der Sicherheitsfunktion durchgeführt. Die Spezifikation kann unter Verwendung von den Eingaben der Kontextmenüs vom Anwender in Form einer White-Box-Prüfung verifiziert und freigegeben werden.

Die Verifikation der Spezifikation kann von der Softwareoberfläche durch Checkpunkte, Freigabefelder usw. unterstützt werden. Diese Verifikation kann auch in der Softwareoberfläche dokumentiert werden.

Im Teilschritt P3 wird der Sicherheitsfunktionsquellcode automatisch erstellt. Gemäß der linearen Darstellung des Architekturmodells der DIN EN ISO 13849-1 können die einzelnen Funktionsbausteine der Sicherheitsfunktion durch die Softwareoberfläche miteinander verbunden und parametriert werden. Die Art der Funktionsbausteine, deren Einstellungen und Verschaltungen zu vollständigen Sicherheitsfunktionen ergeben sich aus den Angaben der Kontextmenüs, d.h., aus den digitalen Pflichtenheftinformationen.

Eine Angabe im Kontextmenü beschreibt beispielsweise eine Eigenschaft in Bezug zur Software, der Art des relevanten Funktionsbausteine, Formalparametereinstellungen des Funktionsbausteins, und Verschaltungen zur Hardware und zu weiteren Funktionsbausteinen in der in Fig. 3 dargestellten Signalkette S1 bis S3.

Der Code kann auch automatisch kommentiert werden, so dass ein normkonformer Quellcode entsteht. Die Kommentierung ergibt sich aus den Angaben der Kontextmenüs, d.h., aus den digitalen Pflichtenheftinformationen.

Die Softwareverschaltung zur Hardware und zu weiteren Sicherheitsfunktionen kann automatisch durch die Programmieroberfläche hergestellt werden. Die Verschaltung ergibt sich aus den Informationen der Kontextmenüs, d.h., aus den Pflichtenheftinformationen.

Des Weiteren können die sicherheitsbezogen Geräteparameter der sicheren Ein- und Ausgänge automatisch gemäß den Angaben der Spezifikation vorgegeben werden. Die Werte der sicherheitsbezogenen Geräteparameter ergeben sich beispielsweise aus der Angabe der Sicherheitsintegrität der Kontextmenüs.

Darüber hinaus kann der Anwender von der sicheren Programmieroberfläche Informationen erhalten, in welcher Art die Sensoren und Aktoren an die Hardware angeschlossen werden müssen, damit die notwendige Sicherheitsintegrität erreicht wird. Dazu dienen beispielsweise erstellte, geprüfte und freigegebene Schaltungsbeispiele als graphische Darstellung in der sicheren Softwareoberfläche. Somit erhält der Anwender das aus der Spezifikation abgeleitete Softwareprojekt mit Kommentierung, in Bezug zur notwendigen Sicherheitsintegrität eingestellte Geräteparameter und alle Informationen, um die Sicherheitsintegrität seiner Applikation erfüllen zu können.

Im Teilschritt P4 wird der Sicherheitsfunktionsquellcode verifiziert. Die automatische Erstellung des Quellcodes und der Geräteparameter sind hierbei so weit qualifiziert, dass eine Verifikation durch den Anwender nicht erforderlich ist. Der Prozess der Qualifizierung kann in Form einer CRC-Prüfung oder durch andere Absicherungen erfolgen. Auf der Basis der Informationen der Kontextmenüs wird dabei eine Checksumme gebildet. Diese Checksumme sollte mit der Checksumme übereinstimmen, die von den Compilern der sicheren Programmieroberfläche erzeugt wird. Durch die Programmieroberfläche wird beispielsweise auch geprüft, ob die Reaktionszeit des Steuerungssystems eingehalten oder überschritten wird.

Im Teilschritt P5 wird eine Black-Box-Testspezifikation erstellt. Die Black-Box-Testspezifikation wird auf Basis einer Anforderungsbeschreibung der einzelnen Sicherheitsfunktionen und deren digitalen Spezifikation automatisch von der Programmieroberfläche beispielsweise in Form einer Liste erstellt. Diese Liste wird auf Basis von vordefinierten Testfällen pro Sicherheitsfunktion erstellt. Um welche Sicherheitsfunktionen es sich handelt, ergibt sich dabei aus den Vorgaben in den Kontextmenüs, d.h., Pflichtenheftinformationen. Mit dieser Maßnahme sind vollständige standardisierte Testfallbeschreibungen möglich. Hierbei kann es sich um eine Verlinkung von den Informationen der Kontextmenüs zu den erstellten, geprüften und freigegebenen Listen der standardisierten Testfallbeschreibungen handeln. Die Auswahl der Testfälle wird in Abhängigkeit von der notwendigen Sicherheitsintegrität der Sicherheitsfunktion erstellt. Des Weiteren kann die Art der Sicherheitsfunktion sowie die Kombination der Funktionsbausteine, der Parameterwerte und der Geräteparameter, beispielsweise automatisch eingestellt, ausschlaggebend für die automatische Zusammenstellung der Testfälle sein. Das Ergebnis ist die automatisch erstelle Black-Box-Testspezifikation für programmierte Sicherheitsfunktionen.

Im Teilschritt P6 wird die Black-Box-Testspezifikaton verifiziert. Durch die qualifizierte automatische Erstellung der Black-Box-Testspezifikation ist eine Verifikation durch den Anwender nicht erforderlich. Weitere Maßnahmen zur Qualifizierung sind in der vorgenannten Norm DIN EN ISO 13849-1, welche insofern zu dieser Offenbarung gezählt wird, beschrieben.

Im Teilschritt P7 wird die sicherheitsbezogene Anwendungssoftware, welche ein die ausführbare Sicherheitsfunktion realisiert, verifiziert. Der Anwender kann hierbei auf Basis der automatisch erstellten Black-Box-Testspezifikation die Validierung der sicherheitsbezogenen Anwendungssoftware in Form einer Funktionsprüfung durchführen und die Testergebnisse dokumentieren.

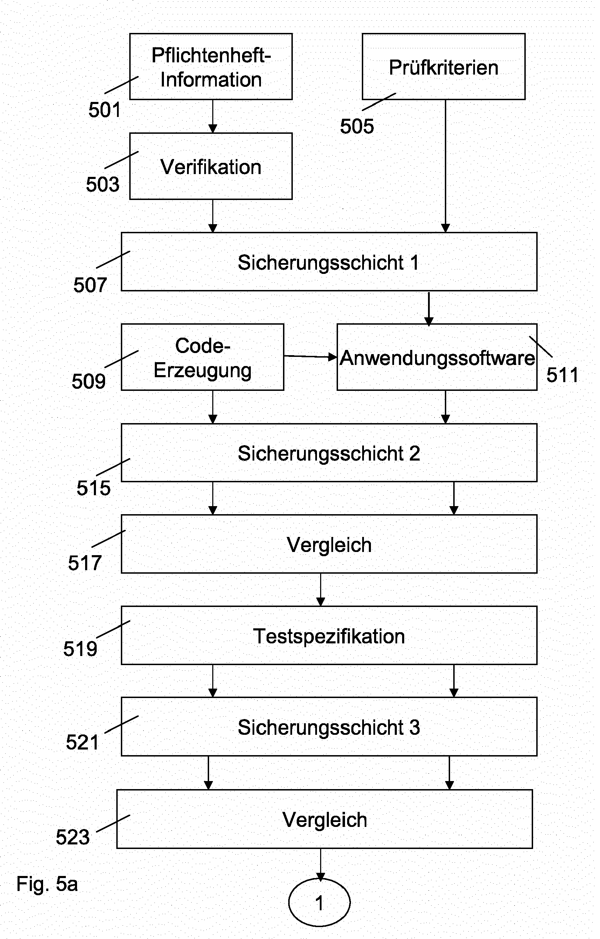

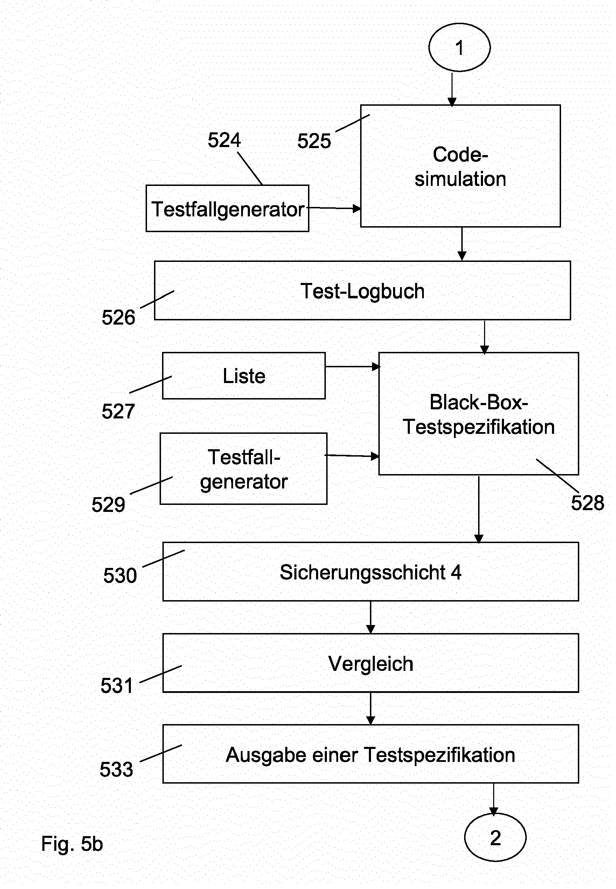

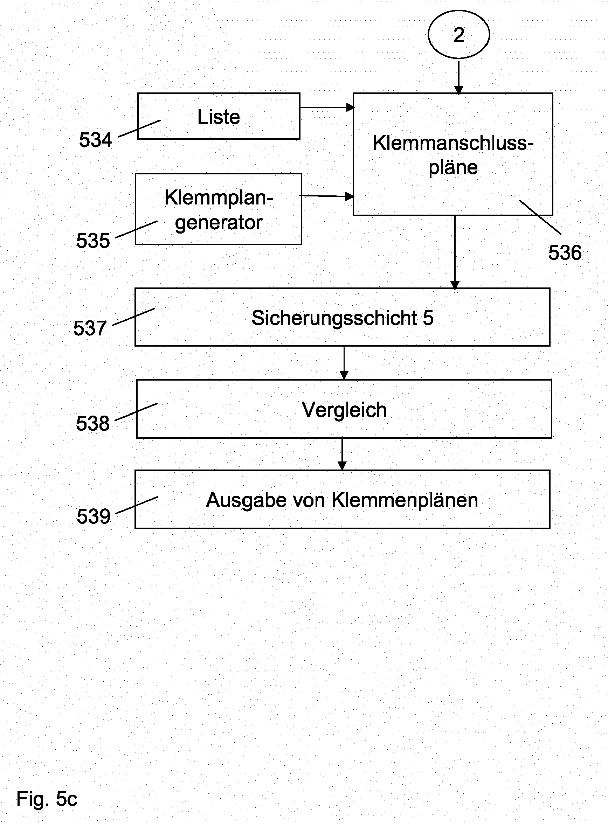

In den Fig. 5a, 5b und 5c ist ein Diagramm eines Verfahrens zum automatischen Herstellen einer ausführbaren Sicherheitsfunktion gemäß einer Ausführungsform dargestellt. Im Schritt 501 werden die Pflichtenheftinformationen beispielsweise durch einen Anwender softwaretechnisch und unabhängig von einem etwaigen Code-Generator eingegeben. Im Schritt 503 werden die Pflichtenheftinformationen bzw. deren Vorgaben durch den Anwender verifiziert. Die Verifikation kann auf der Basis von Prüfpunkten erfolgen, welche in der Form einer Checkliste vorliegen können.

In einem weiteren Schritt 505 können, beispielsweise parallel zu den Schritten 501, 503, unabhängig bzw. extern von einer Dateneingabe ermittelte, festgelegte Prüfkriterien für die Funktionsbausteine, welche aus Softwaremodulen vorliegen können, einschließlich deren Parameterisierung, Verschaltung der Funktionsbausteine zu Sicherheitsfunktionen, sicherheitsbezogene Geräteparameter, eine Spezifikation der Code-Simulation, eine Spezifikation der Black-Box-Testfälle oder Klemmenpläne vorgegeben werden.

Die Schritte 501 und/oder 505 liefern digitale Parameter, welche die Sicherheitsfunktion spezifizieren. Diese digitalen Parameter werden im Schritt 507 zusammengeführt. Der Schritt 507 kann eine erste Sicherungsschicht realisieren, deren Ergebnis ein erster digitaler Prüfwert ist. Hierbei können Checksummen oder andere Software-Sicherungsmechanismen für alle in dem Pflichtenheft spezifizierten Sicherheitsfunktionen einschließlich aller sicherheitsbezogenen Geräteparameter zur Erreichung der Sicherheitsfunktionen für sicherheitsbezogene Anwendungssoftware einschließlich aller Parameter, Testspezifikation für die Code-Simulation, Black-Box-Testspezifikation oder Klemmenpläne gebildet werden.

Hiernach wird ein Sicherheitsfunktionsquellcode der Sicherheitsfunktion erstellt und kompiliert. Hierzu kann im Schritt 509 unter Verwendung einer sicheren Programmieroberfläche und/oder eines Hardware-Konfigurationstools und/oder eines Code-Generators und/oder eines Parametergenerators die sicherheitsbezogene Anwendungssoftware, welche die ausführbare Sicherheitsfunktion realisiert, automatisch erstellt und im Schritt 511 bereitgestellt werden. Hierbei können die eingestellten sicherheitsbezogenen Geräteparameter berücksichtigt werden. Die Programmierung und die Einstellung der Geräteparameter durch einen Anwender sind somit nicht mehr notwendig. Durch die Kompilierung des beispielsweise mittels eines Code-Generators erstellten Sicherheitsfunktionsquellcodes entsteht die ausführbare Sicherheitsfunktion, welche nachfolgend im Schritt 515, welcher eine zweite Sicherungsschicht abbildet, verifiziert. Hierbei wird ein zweiter digitaler Prüfwert erzeugt. Im Schritt 515 können Checksummen oder andere Software-Sicherungsmechanismen für die automatisch erstellte sicherheitsbezogene Anwendungssoftware, welche die ausführbare Sicherheitsfunktion beispielhaft repräsentiert, einschließlich aller sicherheitsbezogenen Geräteparameter zur Erreichung einer Sicherheitsintegrität gebildet werden.

Im nachfolgenden Schritt 517 werden die Ergebnisse der ersten und der zweiten Sicherungsschicht verglichen. Hierbei werden beispielsweise die Checksummen bezüglich eines Überprüfungskriteriums verglichen. Das Überprüfungskriterium kann vorgeben, dass beide Checksummen gleich sein müssen, um sicherzustellen, dass die unabhängigen Software-Elemente auf Basis der Pflichtenheftinformation zum gleichen Ergebnis gekommen sind. Eine Verifikation des Sicherheitsfunktionsquellcodes durch den Anwender kann somit entfallen. Hiernach kann die ausführbare Sicherheitsfunktion bereitgestellt werden.

Die nachfolgenden Schritte sind optional:
Im Schritt 519 kann eine automatische Testspezifikation für eine Code-Simulation erstellt werden. Auf diese Weise entfällt die Erstellung der Testspezifikation durch einen Anwender.

In einem weiteren Schritt 521, in welchem eine dritte Sicherungsschicht realisiert wird, kann ein weiterer digitaler Prüfwert beispielsweise durch die Bildung von Checksummen oder durch andere Software-Sicherungsmechanismen für die Teilspezifikation der Code-Simulation gebildet werden.

In einem weiteren Schritt 523 können die Ergebnisse, d.h. die digitalen Prüfwerte, der ersten Sicherungsschicht 507 und der dritten Sicherungsschicht 521 beispielsweise mittels des vorgenannten Überprüfungskriteriums verglichen werden. Hierbei sollten die Prüfwerte, beispielsweise Checksummen, gleich sein, damit sichergestellt ist, dass die unabhängigen Software-Elemente auf Basis der Pflichtenheftinformationen zum gleichen Ergebnis gekommen sind. Eine Verifikation der Testspezifikation zur Code-Simulation durch den Anwender kann somit entfallen.

In einem weiteren, optionalen Schritt 524 kann in einer sicheren Programmieroberfläche mittels eines Software-Simulators oder eines Testfallgenerators die Code-Simulation 525 automatisch durchgeführt werden. Die Simulation der Software durch den Anwender kann somit entfallen.

In einem weiteren Schritt 526 kann eine automatische Erstellung eines Testlogbuchs für die Code-Simulation erfolgen.

In einem weiteren Schritt 527 können Listen von Black-Box-Testfällen für die Sicherheitsfunktionen beispielsweise spezifisch in Bezug zur Sicherheitsintegrität vorgegeben werden. Im Schritt 528 können Black-Box-Testspezifikationen unter Verwendung eines Black-Box-Testfallgenerators 529 automatisch für die einzelnen Sicherheitsfunktionen auf der Basis der Pflichtenheftinformationen erstellt werden.

In einem nachfolgenden Schritt 530, in welchem eine vierte Sicherungsschicht realisiert wird, kann ein weiterer digitaler Prüfwert in einer weiteren, vierten Sicherungsschicht durch beispielsweise eine Bildung von Checksummen oder durch andere softwarebezogene Sicherheitsmechanismen für die Black-Box-Testspezifikation gebildet werden.

In einem nachfolgenden Schritt 531 werden die digitalen Prüfwerte der ersten Sicherungsschicht 507 und der vierten Sicherungsschicht 530 miteinander verglichen. Hierbei müssen beide Prüfwerte, beispielsweise Checksummen, gleich sein, damit sichergestellt ist, dass die unabhängigen Software-Elemente, d.h. Funktionsbausteine, auf Basis der Pflichtenheftinformation zum gleichen Ergebnis gekommen sind. Eine Verifikation der Testspezifikation durch den Anwender ist somit nicht mehr notwendig.

In einem weiteren, optionalen Schritt 533 wird die Black-Box-Testspezifikation beispielsweise in der Gestalt einer Checkliste einschließlich einer Testprozedurspezifikation ausgegeben.

In einem weiteren Schritt können Anschlusspläne automatisch beispielsweise für Sensoren und Aktoren für die einzelnen Sicherheitsfunktionen auf der Basis der Pflichtenheftinformationen erstellt werden. Hierbei können im Schritt 534 beispielsweise geprüfte Listen von Anschlussbeispielen für die Sicherheitsfunktionen spezifisch in Bezug zur Sicherheitsintegrität bereitgestellt sowie im Schritt 535 ein Klemmen- und Anschlussplangenerator verwendet werden. Die Anschlusspläne werden im Schritt 536 bereitgestellt.

In einem nachfolgenden Schritt 537, in welchem eine fünfte Sicherungsschicht realisiert wird, kann ein weiterer digitaler Prüfwert in einer fünften Sicherungsschicht ermittelt werden. Hierbei können Checksummen oder andere Software-Sicherungsmechanismen für die Black-Box-Testspezifikation gebildet werden.

In einem weiteren, optionalen Schritt 538 werden die digitalen Prüfwerte der ersten Sicherungsschicht 507 und der fünften Sicherungsschicht 537 verglichen. Hierbei wird geprüft, ob beide Prüfwerte, welche beispielsweise Checksummen sein können, gleich sind. Sind beide Prüfwerte gleich, so wird sichergestellt, dass die unabhängigen Software-Elemente auf Basis der Pflichtenheftinformationen zum gleichen Ergebnis gekommen sind. Somit entfällt eine Verifikation der Klemmenpläne durch den Anwender.

In einem weiteren Schritt 539 können die Klemmenpläne ausgegeben werden. Hierbei kann auch eine Zuordnung der Klemmen zu den Sensoren und Aktoren den einzelnen Sicherheitsfunktionen ausgegeben werden.

Die sichere Programmieroberfläche, der Codegenerator zur Erstellung der sicherheitsbezogen Anwendungssoftware, die Testfallgeneratoren, der Hardware-Konfigurator, die umfassende Liste mit Black-Box-Testfällen, die Liste der Testfälle für die Code-Simulation sowie die Zuordnung der Klemmenpunkte sind beispielsweise voneinander unabhängige Softwaremodule, die einzeln entwickelt, geprüft und freigegeben werden. Die Checksummen der einzelnen Sicherungsschichten werden auf unterschiedliche Weise erstellt, sind bevorzugt im Ergebnis zur ersten Sicherungsschicht 507 identisch.

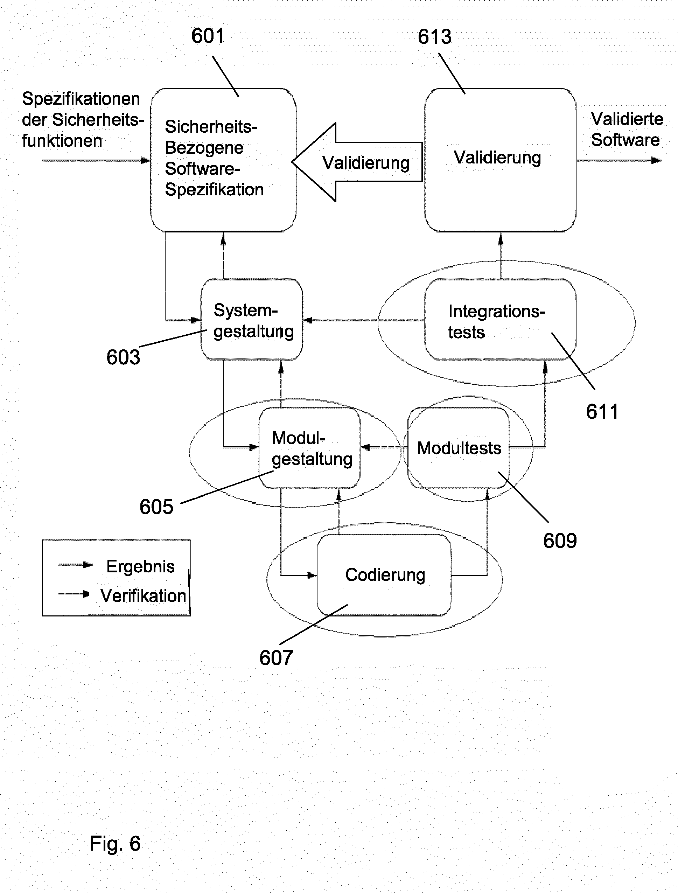

Fig. 6 zeigt ein Modell eines Software-Lebenszyklus gemäß der Norm DIN EN ISO 13849-1. Der Software-Lebenszyklus umfasst die sicherheitsbezogene Software-Spezifikation 601, die Systemgestaltung 603, die Modulgestaltung 605, die Codierung 607, Modultests 609, Integrationstests 611 sowie die Validierung 613. Üblicherweise müssen die Schritte 601 bis 613 manuell und organisatorisch durch einen Anwender durchgeführt werden. Das ist mit einem erheblichen Zeit- und Ressourcenaufwand verbunden. Ferner können sich systematische Fehler in dem Entwicklungsprozess ergeben.

Die vorstehend beschriebene automatische Erzeugung der ausführbaren Sicherheitsfunktion ermöglicht die automatische Ausführung der Schritte 605, 607, 609 und 611 auf Basis einzelner unabhängiger Softwaremodule. Hierbei wird neben der automatischen Ausführung der Sicherungsmechanismen auch die automatische Verifikation der einzelnen Arbeitsschritte ermöglicht. Auf diese Weise wird systematischen Fehlern entgegengewirkt. Die Umsetzung der Anwendungssoftware, welche die ausführbare Sicherheitsfunktion realisiert, wird dadurch auch beschleunigt. Darüber hinaus sind weniger Programmierressourcen und Verifikationsressourcen sowie die Ressourcen zur Herstellung, Prüfung und Freigabe der einzelnen Arbeitsschritte notwendig.

Durch die automatische Erstellung der Sicherheitsfunktion wird der Entwicklungsprozess für sicherheitsbezogene Anwendungssoftware für den Anwender einfacher, kürzer, schneller und kostengünstiger. Ferner werden in vorteilhafter Weise systematische und sicherheitskritische Fehler durch automatische Erstellung des Quellcodes vermieden. Die sicherheitsbezogenen Geräteparameter werden auf Basis der Pflichtenheftangaben in Bezug zur notwendigen Sicherheitsintegrität automatisch pro Sicherheitsfunktion eingestellt. Der Anwender muss dazu diese Daten nicht mehr aus Anwenderdokumentationen ableiten, einstellen und verifizieren. Das führt zu einer weiteren Fehlervermeidung, zu einer Ressourcenersparnis und zu einer Zeitersparnis. Darüber hinaus können Filterzeiten und Watchdogzeiten auf Basis der Pflichtenheftangaben in Bezug zur notwendigen Reaktionszeit pro Sicherheitsfunktion automatisch eingestellt werden. Der Anwender muss diese Daten somit nicht mehr rechnerisch ermitteln, in der Hardwarekonfiguration vorgeben und verifizieren. Der Anwender der programmierbaren bzw. parametrierbaren Sicherheitsfunktion benötigt ferner kein Wissen zur Vorgabe der sicherheitsbezogenen Geräteparameter. Der Anwender kann sich daher nur noch auf die Spezifikation der Sicherheitsfunktionen beschränken und muss deren Softwareumsetzung nicht mehr programmieren, wodurch weitere Fehlerquellen eliminiert werden. Der Anwender muss die erstellte Sicherheitsfunktion nicht mehr verifizieren, weil die Verifikation automatisch in den Softwareentwurfsprozess integriert ist.

Der Anwender kann von einer Programmieroberfläche durch einen normkonformen Prozess der sicherheitsbezogenen Softwareentwicklung geführt werden, ohne programmieren zu müssen. Der Anwender kann trotz der automatischen Codeerstellung einen strukturierten und kommentierten Quellcode erhalten, der im Servicefall diagnostiziert werden kann (Debug). Der Anwender hält daher den Prozess für die Erstellung von sicherheitsbezogener Anwendungssoftware nach Abschluss der Verifikation der Pflichtenheftvorgaben durch die Erfindung automatisch ein. Der Anwender erhält daher automatisiert einen Teil der Nachweisdokumente, mit denen er die Konformität zu den harmonisierten Sektornormen der funktionalen Sicherheit und somit zur Maschinenrichtlinie herstellen kann.

Der Anwender der Programmieroberfläche kann daher durch den Entwicklungsprozess geführt werden, um die Sicherheitsfunktion zu erhalten. Er erhält ein Werkzeug, mit dem die Anforderungen der harmonisierten Normen eingehalten werden, indem Tätigkeiten automatisch umgesetzt und verifiziert werden. Auf der Basis der Spezifikation P1 und P2 und P3 bis P6 wird die sicherheitsbezogene Anwendungssoftware, welche die Sicherheitsfunktion realisiert, durch die sichere Programmierumgebung automatisch erstellt. Auf der Basis der Spezifikation P1 und P2 werden Validierungsmaßnahmen in Form einer Black-Box-Testspezifikation automatisch für Sicherheitsfunktionen erstellt. Bei der Eingabe der Daten kann auf Grundlage geprüfter Daten ein durchgängiger Datensicherheitsmechanismus generiert werden. Die bei der Eingabe generierten Checksummen, welche digitale Prüfwerte formen, sollten auch von allen weiteren Softwaremodulen erreicht werden, damit die Anwendungssoftware verifiziert werden kann. Diese Sicherungsschichten realisieren die automatische Verifikation der Arbeitsschritte und der automatisch erstellten Arbeitsergebnisse. Dennoch wird ein normativ strukturierter und kommentierter sicherer Quellcode der sicherheitsbezogenen Anwendungssoftware erzeugt, der im Debug-Modus eines sicheren Programmiersystems analysiert werden kann. Dieses ist für den Service von Maschinen besonders vorteilhaft.

### BEZUGSZEICHENLISTE

- Erfassen von digitalen Parametern: 101
- Bestimmen eines ersten Prüfwertes: 103
- automatisches Zuordnen von Funktionsbausteinen: 105
- Kompilieren des Sicherheitsfunktionsquellcodes: 107
- Bestimmen eines zweiten Prüfwertes: 108
- Überprüfen eines Überprüfungskriteriums: 111
- Ausgeben der Sicherheitsfunktion: 113
- Verwerfen: 115
- Vorrichtung: 200
- Prozessor: 201
- Funktionsbaustein: 301
- Funktionsbaustein: 303
- Funktionsbaustein: 305
- erster Funktionsbaustein: 401
- zweiter Funktionsbaustein: 403
- dritter Funktionsbaustein: 405
- Verfahrensschritte: 501-539
- Softwarespezifikation: 601
- Systemgestaltung: 603
- Modulgestaltung: 605
- Codierung: 607
- Modultests: 609
- Integrationstests: 611
- Validierung: 613

## Patentansprüche

1. Verfahren zum automatischen Erstellen einer ausführbaren Sicherheitsfunktion für ein Gerät, mit:
Erfassen (101) von digitalen Parametern, welche eine bestimmte Sicherheitsfunktion spezifizieren;
Bestimmen (103) eines ersten Prüfwertes auf der Basis der digitalen Parameter;
automatischem Zuordnen (105) einer Anzahl von digitalen Funktionsbausteinen aus einer Mehrzahl von vordefinierten digitalen Funktionsbausteinen zu den erfassten digitalen Parametern, um einen Sicherheitsfunktionsquellcode der bestimmten Sicherheitsfunktion zu erhalten;
Kompilieren (107) des Sicherheitsfunktionsquellcodes, um die ausführbare Sicherheitsfunktion zu erhalten;
Bestimmen (108) eines zweiten Prüfwertes auf der Basis der ausführbaren Sicherheitsfunktion;
wobei der erste und der zweite Prüfwert auf der Basis einer zyklischen Redundanz bestimmt werden; und
Ausgeben (113) der ausführbaren Sicherheitsfunktion falls der erste Prüfwert und das zweite Prüfwert ein Überprüfungskriterium erfüllen, wobei das Überprüfungskriterium erfüllt ist, wenn der erste Prüfwert und der zweite Prüfwert gleich sind.

2. Verfahren nach Anspruch 1, bei dem die ausführbare Sicherheitsfunktion verworfen wird, falls der erste Prüfwert und der zweite Prüfwert das Überprüfungskriterium nicht erfüllen.

3. Verfahren nach einem der vorstehenden Ansprüche, wobei die digitalen Parameter ferner Geräteparameter umfassen, welche zumindest eine sicherheitsbezogene Gerätefunktion spezifizieren.

4. Verfahren nach einem der vorstehenden Ansprüche, wobei zum Erfassen der digitalen Parameter die digitalen Parameter aus einer Tabelle, insbesondere aus einem digitalen Pflichtenheft, oder aus einem Speicher ausgelesen werden.

5. Verfahren nach einem der vorstehenden Ansprüche, wobei im Schritt des Zuordnens (105) der digitalen Funktionsbausteine ein erster digitaler Funktionsbaustein für die Eingangssignalverarbeitung, ein zweiter digitaler Funktionsbaustein für die Verarbeitung von Ausgangssignalen des ersten digitalen Funktionsbausteines, und ein dritter digitaler Funktionsbaustein für die Erzeugung eines Ausgangssignals für das Gerät auf der Basis eines Ausgangssignals des zweiten digitalen Funktionsbausteins ausgewählt werden.

6. Verfahren nach Anspruch 5, wobei der erste digitale Funktionsbaustein für eine Auswertung von Eingangssignalen, insbesondere eine Äquivalenzauswertung oder Antivalenzauswertung von Sensorsignalen, vorgesehen ist, wobei der zweite digitale Funktionsbaustein für die Erzeugung einer Sicherheitsaktion, insbesondere eines Nothaltes, einer Anlaufsperre oder einer Ausschaltsperre vorgesehen ist, und wobei der dritte digitale Funktionsbaustein für die Ausgabe eines Steuersignals zur Steuerung des Gerätes gemäß der Sicherheitsaktion vorgesehen ist.

7. Verfahren nach einem der vorstehenden Ansprüche, wobei im Schritt des Zuordnens (105) der digitalen Funktionsbausteine die ausgewählten digitalen Funktionsbausteine miteinander automatisch verbunden oder parametrisiert werden, insbesondere gemäß den digitalen Parametern automatisch verbunden oder parametrisiert werden.

8. Verfahren nach einem der vorstehenden Ansprüche, wobei im Schritt des Zuordnens (105) ein Klemmenplan für die Beschaltung des Gerätes erzeugt wird.

9. Verfahren nach einem der vorstehenden Ansprüche, wobei ferner weitere Prüfwerte bestimmt werden, um die ausführbare Sicherheitsfunktion zu überprüfen .

10. Verfahren nach einem der vorstehenden Ansprüche, das mittels einer Datenverarbeitungsanlage ausgeführt wird.

11. Computerprogramm zum Ausführen des Verfahrens gemäß einem der Ansprüche 1 bis 10, wenn das Computerprogramm auf einer Datenverarbeitungsanlage ausgeführt wird.

12. Programmtechnisch eingerichtete Vorrichtung (200) zum automatischen Erstellen einer ausführbaren Sicherheitsfunktion für ein Gerät, mit einem Prozessor (201), welcher ausgebildet ist:
digitale Parameter, welche eine bestimmte Sicherheitsfunktion spezifizieren, zu erfassen;
einen ersten Prüfwert auf der Basis der digitalen Parameter zu bestimmen;
eine Anzahl von digitalen Funktionsbausteinen aus einer Mehrzahl von vordefinierten digitalen Funktionsbausteinen zu den erfassten digitalen Parametern zuzuordnen, um einen Sicherheitsfunktionsquellcode der bestimmten Sicherheitsfunktion zu erhalten;
den Sicherheitsfunktionsquellcode zu kompilieren, um die ausführbare Sicherheitsfunktion zu erhalten;
einen zweiten Prüfwert auf der Basis der ausführbaren Sicherheitsfunktion zu bestimmen;
wobei der erste und der zweite Prüfwert auf der Basis einer zyklischen Redundanz bestimmt werden; und
die ausführbare Sicherheitsfunktion auszugeben, falls der erste Prüfwert und der zweite Prüfwert ein Überprüfungskriterium erfüllen, wobei das Überprüfungskriterium erfüllt ist,
wenn der erste Prüfwert und der zweite Prüfwert gleich sind.

13. Programmtechnisch eingerichtete Vorrichtung nach Anspruch 12, wobei der Prozessor ausgebildet ist, das Computerprogramm nach Anspruch 11 auszuführen.

## Claims

1. Method for automatically creating an executable safety function for a device, comprising:
acquiring (101) digital parameters which specify a particular safety function;
determining (103) a first test value on the basis of the digital parameters;
automatically assigning (105) a number of digital function modules from a plurality of predefined digital function modules to the acquired digital parameters in order to obtain a safety function source code of the particular safety function;
compiling (107) the safety function source code in order to obtain the executable safety function;
determining (108) a second test value on the basis of the executable safety function;
wherein the first and the second test value are determined on the basis of a cyclical redundancy; and
outputting (113) the executable safety function if the first test value and the second test value meet a checking criterion, wherein the checking criterion is met if the first test value and the second test value are equal.

2. Method according to claim 1, wherein the executable safety function is discarded if the first test value and the second test value do not meet the checking criterion.

3. Method according to either of the preceding claims, wherein the digital parameters further comprise device parameters which specify at least one safety-related device function.

4. Method according to any of the preceding claims, wherein, in order to acquire the digital parameters, the digital parameters are read out from a table, in particular from a digital specification, or from a memory.

5. Method according to any of the preceding claims, wherein, in the step of assigning (105) the digital function modules, a first digital function module is selected for the input signal processing, a second digital function module is selected for processing output signals of the first digital function module, and a third digital function module is selected for generating an output signal for the device on the basis of an output signal of the second digital function module.

6. Method according to claim 5, wherein the first digital function module is provided for evaluating input signals, in particular an equivalence evaluation or a non-equivalence evaluation of sensor signals, wherein the second digital function module is provided for generating a safety action, in particular an emergency stop, blocking start-up or blocking switch-off, and wherein the third digital function module is provided for outputting a control signal for controlling the device according to the safety action.

7. Method according to any of the preceding claims, wherein in the step of assigning (105) the digital function modules, the selected digital function modules are automatically interconnected or parameterized, in particular automatically connected or parameterized according to the digital parameters.

8. Method according to any of the preceding claims, wherein in the step of assigning (105), a terminal connection plan for the circuitry of the device is generated.

9. Method according to any of the preceding claims, wherein additional test values are further determined in order to check the executable safety function.

10. Method according to any of the preceding claims which is executed by means of a data processing system.

11. Computer program for executing the method according to any of claims 1 to 10 if the computer program is executed on a data processing system.

12. Programmable apparatus (200) for automatically creating an executable safety function for a device, the apparatus comprising a processor (201), which is designed:
to acquire digital parameters which specify a particular safety function;
to determine a first test value on the basis of the digital parameters;
to assign a number of digital function modules from a plurality of predefined digital function modules to the acquired digital parameters in order to obtain a safety function source code of the particular safety function;
to compile the safety function source code in order to obtain the executable safety function;
to determine a second test value on the basis of the executable safety function; wherein the first and the second test value are determined on the basis of a cyclical redundancy; and
to output the executable safety function if the first test value and the second test value meet a checking criterion, wherein the checking criterion is met if the first test value and the second test value are equal.

13. Programmable apparatus (200) according to claim 12, wherein the processor is designed to execute the computer program according to claim 11.

## Revendications

1. Procédé destiné à établir automatiquement une fonction de sécurité exécutable pour un appareil, avec :
détection (101) de paramètres numériques qui spécifient une fonction de sécurité définie ;
définition (103) d'une première valeur de contrôle sur la base des paramètres numériques ;
affectation (105) automatique aux paramètres numériques détectés d'un nombre de blocs fonction numériques à partir d'une pluralité de blocs fonction numériques prédéfinis afin d'obtenir un code source de fonction de sécurité de la fonction de sécurité définie ;
compilation (107) du code source de fonction de sécurité afin d'obtenir la fonction de sécurité exécutable ;
définition (108) d'une deuxième valeur de contrôle sur la base de la fonction de sécurité exécutable ;
dans lequel la première et la deuxième valeur de contrôle sont définies sur la base d'une redondance cyclique ; et
délivrance (113) de la fonction de sécurité exécutable si la première valeur de contrôle et la deuxième valeur de contrôle respectent un critère d'examen, dans lequel le critère d'examen est respecté quand la première valeur de contrôle et la deuxième valeur de contrôle sont identiques.

2. Procédé selon la revendication 1, dans lequel la fonction de sécurité exécutable est rejetée si la première valeur de contrôle et la deuxième valeur de contrôle ne respectent pas le critère d'examen.

3. Procédé selon l'une des revendications précédentes, dans lequel les paramètres numériques comprennent en outre des paramètres d'appareil qui spécifient au moins une fonction d'appareil liée à la sécurité.

4. Procédé selon l'une des revendications précédentes, dans lequel, pour la détection des paramètres numériques, les paramètres numériques sont chargés à partir d'un tableau, en particulier à partir d'un cahier des charges numérique, ou à partir d'une mémoire.

5. Procédé selon l'une des revendications précédentes, dans lequel, dans l'étape d'affectation (105) des blocs fonction numériques, un premier bloc fonction numérique est sélectionné pour le traitement de signaux d'entrée, un deuxième bloc fonction numérique est sélectionné pour le traitement de signaux de sortie du premier bloc fonction numérique, et un troisième bloc fonction numérique est sélectionné pour la production d'un signal de sortie pour l'appareil sur la base d'un signal de sortie du deuxième bloc fonction numérique.

6. Procédé selon la revendication 5, dans lequel le premier bloc fonction numérique est prévu pour une analyse de signaux d'entrée, en particulier une analyse d'équivalence ou analyse d'antivalence de signaux de capteur, dans lequel le deuxième bloc fonction numérique est prévu pour la production d'une action de sécurité, en particulier d'un arrêt d'urgence, d'un verrouillage antidémarrage ou d'un verrouillage d'arrêt, et dans lequel le troisième bloc fonction numérique est prévu pour la délivrance d'un signal de sortie destiné à la commande de l'appareil selon l'action de sécurité.

7. Procédé selon l'une des revendications précédentes, dans lequel, dans l'étape d'affectation (105) des blocs fonction numériques, les blocs fonction numériques sélectionnés sont automatiquement raccordés les uns aux autres ou paramétrés, en particulier sont automatiquement raccordés ou paramétrés selon les paramètres numériques.

8. Procédé selon l'une des revendications précédentes, dans lequel, dans l'étape d'affectation (105), un plan de bornes pour le câblage de l'appareil est produit.

9. Procédé selon l'une des revendications précédentes, dans lequel en outre d'autres valeurs de contrôle sont définies afin d'examiner la fonction de sécurité exécutable.

10. Procédé selon l'une des revendications précédentes, qui est exécuté au moyen d'une installation de traitement de données.

11. Programme informatique destiné à l'exécution du procédé selon l'une des revendications 1 à 10 quand le programme informatique est exécuté sur une installation de traitement de données.

12. Dispositif (200) aménagé sur la base de programme destiné à l'établissement automatique d'une fonction de sécurité exécutable pour un appareil, avec un processeur (201) qui est configuré :
pour détecter des paramètres numériques qui spécifient une fonction de sécurité définie ;
pour définir une première valeur de contrôle sur la base des paramètres numériques ;
pour affecter aux paramètres numériques détectés un nombre de blocs fonction numériques à partir d'une pluralité de blocs fonction numériques prédéfinis afin d'obtenir un code source de fonction de sécurité de la fonction de sécurité définie ;
pour compiler le code source de fonction de sécurité afin d'obtenir la fonction de sécurité exécutable ;
pour définir une deuxième valeur de contrôle sur la base de la fonction de sécurité exécutable ;
dans lequel la première et la deuxième valeur de contrôle sont définies sur la base d'une redondance cyclique ; et
pour délivrer la fonction de sécurité exécutable si la première valeur de contrôle et la deuxième valeur de contrôle respectent un critère d'examen, dans lequel le critère d'examen est respecté quand la première valeur de contrôle et la deuxième valeur de contrôle sont identiques.

13. Dispositif (200) aménagé sur la base de programme selon la revendication 12, dans lequel le processeur est configuré pour exécuter le programme informatique selon la revendication 11.
